# EUROPÄISCHE PATENTSCHRIFT

(11) **EP 0 308 774 B1**
(45) Veröffentlichungstag und Bekanntmachung des Hinweises auf die Patenterteilung: **10.11.1993**
(21) Anmeldenummer: 88114916.5
(22) Anmeldetag: 13.09.1988
(51) Int. Cl.: C08G 69/46, C08G 69/28

(54) **Verfahren zur kontinuierlichen Extraktion von Polyamiden**
Process for the continuous extraction of polyamides
Procédé pour l'extraction en continu de polyamides

(30) Priorität: 24.09.1987 DE 3732170
(43) Veröffentlichungstag der Anmeldung: 29.03.1989
(73) Patentinhaber: BAYER AG, 51368 Leverkusen (DE)
(72) Erfinder: Selbeck, Harald, Dr., D-4150 Krefeld (DE); Horsthemke Dr., D-4150 Krefeld (DE); Böckmann, August, Dr., D-4150 Krefeld (DE); Weber, Frank, D-4100 Duisburg 14 (DE)

(56) Entgegenhaltungen:
- DD-A- 135 501
- DE-A- 1 209 293
- DE-A- 1 660 289
- US-A- 3 539 539

## Beschreibung

Gegenstand der Erfindung ist ein Verfahren zur kontinuierlichen Extraktion von Polyamiden, bei dem der im Polyamid verbleibende Restgehalt an niedermolekularen Anteilen sehr gering ist; ferner ein dafür geeignetes, zweigeteiltes Extraktionsrohr, bei dem der obere Teil mit dem unteren Teil durch ein Übergangsrohr geringeren Durchmessers verbunden ist und im oberen Teil eine Gegenstromextraktion, im unteren Teil eine Gleichstromextraktion unter bestimmten Bedingungen durchgeführt wird.

Polyamide enthalten nach der Polymerisation teilweise noch erhebliche Mengen an Ausgangsmonomeren, Oligomeren bzw. niedermolekularen Kondensationsprodukten. Da sich diese niedermolekularen Anteile bei der Verwendung des Polyamids in den meisten Fällen als nachteilig erweisen, müssen sie aus dem Polymer entfernt werden. Im Polycaprolactam (Polyamid 6) beispielsweise sind nach der Polymerisation noch ca. 10 % ε-Caprolactam, ca. 0,5 % dimeres Caprolactam sowie höhere Oligomere (Trimere, Tetramere etc.) enthalten.

In der Patentliteratur werden diverse kontinuierliche Verfahrensvarianten beschrieben, die zu einer gleichmäßigen und weitgehenden Extraktion des monomeren ε-Caprolactams und der Oligomeren aus Polyamid 6 führen sollen. Dabei wird überwiegend die Gegenstromextraktion mit heißem Wasser angewendet, wobei das meist in Granulatform vorliegende Polyamid einem Extraktionsrohr oben zugeführt und das Extraktionswasser von unten eingeleitet wird. Das extrahierte Granulat wird dem Extraktionsrohr unten entnommen und in Folgeanlagen getrocknet bzw. zu höheren Molekulargewichten nachkondensiert. Das ε-Caprolactam und Oligomere enthaltende Extraktionswasser wird oben am Extraktionsrohr entnommen. Nach Abdestillation des Wassers werden ε-Caprolactam und Oligomere zurückgewonnen und gegebenenfalls zum ε-Caprolactam aufgearbeitet oder direkt wieder in die Polymerisation zurückgeführt.

Eine gute Extraktion der niedermolekularen Anteile soll sich laut Literaturangaben erreichen lassen, wenn der Durchsatz an Lösungsmittel sehr hoch ist. Hierdurch fallen aber die Monomeren und Oligomeren in großer Verdünnung an, was die Rückgewinnung verteuert.

Um das Extraktionsverfahren wirtschaftlich zu gestalten, wird daher angestrebt, möglichst wenig Wasser zum Extrahieren zu verwenden. Da aber die Lactamkonzentration und damit die Dichte des Extraktionswassers im Extraktionsrohr nach oben zunehmen, kann es zu abwärts gerichteten Gegenströmungen lactamreichen Wassers kommen, wodurch die Wirksamkeit der Extraktion wesentlich verschlechtert wird. In der Patentliteratur finden sich zahlreiche Veröffentlichungen, die sich mit der Verhinderung dieser Gegenströmungen befassen.

In der DE-AS 1 209 293 wird ein Gegenstrom-Extraktionsverfahren beschrieben, bei welchem dem Extraktionsrohr in verschiedener Höhe das von unten zugeführte Wasser entnommen wird. Am oberen Ende des Extraktionsrohres wird eine geringe Menge einer hochprozentigen und an einer Zwischenanzapfung eine höhere Menge einer verdünnteren Lactamlösung entnommen. Durch die größere Menge an verdünnterer Lösung im unteren Teil des Extraktionsrohres soll die Extraktion verbessert werden. Das Verfahren ist aber problematisch, da durch die hohe Lactamkonzentration im oberen Teil des Extraktionsrohres die Dichte des Extraktionswassers so stark erhöht wird, daß Rückströmungen nach unten in die lactamärmeren Wasserzonen erfolgen können, wodurch die Extraktionsleistung verschlechtert wird. Nachteilig ist auch, daß die an der Zwischenzapfstelle entnommene Lactamlösung zur Rückgewinnung des ε-Caprolactams destilliert werden muß, wodurch sich kein wirtschaftlicher Vorteil ergibt. In der DE-AS 1 209 293 wird auch beschrieben, daß die Extraktion oberhalb der Siedetemperatur des Extraktionsmittels, d.h., unter Druck erfolgen kann. In diesem Fall muß das Granulat durch eine Druckschleuse in das Extraktionsrohr eingebracht werden. Ein derartiges Verfahren ist technisch aufwendig und daher nicht empfehlenswert.

In der DE-AS 1 519 936 wird ein Gegenstrom-Extraktionsverfahren beschrieben, bei dem durch Einbauten, welche über die Höhe des Extraktionsrohres verteilt sind, die Aufwärtsströmung des Extraktionswassers gegenüber der Gegenströmung verbessert werden soll. Ein derartiges Verfahren hat den Nachteil, daß es technisch aufwendig ist und sich in den Einbauten Toträume ausbilden können, in denen Granulatkörper länger als gewünscht verweilen und daher geschädigt werden können. Die angegebene Extraktionsleistung überzeugt ebenfalls nicht. Im Granulat verbleiben 0,5 Gew.-% Monomere.

Der Erfindung liegt die Aufgabe zugrunde, mit einem kontinuierlichen Extraktionsverfahren die niedermolekularen Anteile auf wirtschaftliche Weise so weit zu entfernen, daß höchste Produktanforderungen erfüllt werden. Die literaturbekannten Verfahrensvarianten für die kontinuierliche Extraktion von Polyamiden sind zwar durchaus geeignet, das Polyamid so weit zu extrahieren, daß unkritische Anwendungen damit erfüllt werden können; für spezielle Anwendungen reicht aber die Extraktionsleistung der bekannten Verfahren nicht aus. Eine unkritische Anwendung ist z.B. die Verarbeitung von Polyamid zu Spritzgußteilen, bei denen keine besonderen Anforderungen gestellt werden. Als kritische Anwendungen sind die Verwendung für Spinnzwecke sowie die Verarbeitung zu Folien zu nennen. Von Folienverarbeitern beispielsweise wird ein äußerst niedriger Restdimerengehalt im Polyamid 6 gefordert, da erhöhte Dimerengehalte zu Walzenbelagbildung und damit zu Verarbeitungsstörungen führen. Ein technisch hochwertiges Polyamid 6 für die Folienverarbeitung sollte einen Restdimerengehalt von kleiner 0,05 %, vorzugsweise kleiner 0,03 % aufweisen. Ein derartiges Produkt läßt sich auf Folienanlagen längere Zeit problemlos verarbeiten. Insbesondere sind die in der Literatur beschriebenen Gegenstrom-Extraktionsverfahren überfordert, wenn es gilt, die Forderung nach einer hohen Lactamkonzentration im ablaufenden Extraktionswasser und einem niedrigen Restdimerengehalt zu erfüllen. Wird das Extraktionsrohr mit wenig Wasser und daraus resultierend einer hohen Lactamkonzentration betrieben, erhöht sich auch die Dimeren- bzw. Oligomerenkonzentration im Wasser. Dadurch wird die Dimerenextraktion aus dem Polyamid in der lactamreichen oberen Zone erschwert. In der unteren Zone, in der durch das zulaufende Extraktionswasser eine geringere Lactam- und Oligomerenkonzentration vorliegt, kann der Dimerengehalt nicht mehr auf die gewünschten Werte von kleiner 0,05 % erniedrigt werden.

Gegenstand der Erfindung ist ein Verfahren zur kontinuierlichen Extraktion niedermolekularer Anteile aus Polyamiden, insbesondere Poly-ε-caprolactam, mittels Extraktionsflüssigkeiten und Verwendung eines Extraktionsrohres, dadurch gekennzeichnet, daß in einem zweigeteilten Extraktionsrohr, welches durch ein Übergangsrohr mit kleinerem Durchmesser verbunden ist, im oberen Teil des Extraktionsrohres eine Gegenstromextraktion und im unteren Teil des Extraktionsrohres eine Gleichstromextraktion durchgeführt wird, wozu die kurz oberhalb des Übergangsrohres in den oberen Teil des zweigeteilten Extraktionsrohres eingeleitete Extraktionsflüssigkeit teilweise nach oben und teilweise nach unten geführt, und sowohl am oberen Ende als auch am unteren Ende des Extraktionsrohres Extraktionsflüssigkeit entnommen wird und wobei das Poly-ε-caprolactam das zweigeteilte Extraktionsrohr von oben nach unten durchläuft.

Der obere Teil des Extraktionsrohres wird bei Temperaturen unterhalb des Siedepunktes der Extraktionsflüssigkeit, der untere Teil wahlweise mit Temperaturen unterhalb oder oberhalb des Siedepunktes des Extraktionsmittels bei Normaldruck betrieben. Wird eine besonders effektive Extraktion, insbesondere bezüglich des Restdimerengehaltes im Poly-ε-caprolactam verlangt, wird der untere Teil des Extraktionsrohres bevorsugt bei Temperaturen betrieben, die oberhalb des Siedepunktes des Extraktionsmittels bei Normaldruck liegen (wobei das Extraktionsmittel unter dem hydrostatischem Druck der Extraktionssäule steht).

Als Extraktionsflüssigkeit wird wegen der Preiswürdigkeit und der leichten Handhabbarkeit meist Wasser verwendet, doch sind auch andere Extraktionsmittel, wie z.B. niedere Monoalkohole, geeignet.

Wird Wasser als Extraktionsmedium verwendet, werden im oberen Teil des Extraktionsrohres Temperaturen von 80 bis 100°C, bevorzugt 85 bis 99°C, angewandt. Der untere Teil des Extraktionsrohres wird im Falle der Extraktion mit Wasser bei 80 bis 150°C, bevorzugt 110 bis 135°C, betrieben.

Ein besonderer Vorteil des erfindungsgemäßen Verfahrens liegt darin, daß eine Extraktion oberhalb des Siedepunktes des Extraktionsmittels bei Normaldruck im unteren Teil des Extraktionsrohres durchgeführt werden kann, ohne daß eine technisch aufwendige Druckschleuse benutzt werden muß. Dazu ist erforderlich, die Baulänge des oberen Teiles des Extraktionsrohres so zu wählen, daß der von der darin befindlichen Flüssigkeitssäule ausgehende statische Flüssigkeitsdruck ausreicht, um Siedevorgänge im unteren Teil des Extraktionsrohres zu verhindern. Dadurch, daß die Extraktionsflüssigkeit in dem unteren Teil des Extraktionsrohres durch das Übergangsrohr im Gleichstrom mit dem Polyamid fließt, erfolgt eine derart wirksame Temperatursperre, daß auch dann das Temperaturprofil im oberen Teil des Extraktionsrohres nicht beeinflußt wird, wenn der untere Teil mit Temperaturen oberhalb des Siedepunktes des Extraktionsmittels bei Normaldruck betrieben wird.

Der Durchmesser des Übergangsrohres beträgt bevorzugt 5 bis 50 %, besonders bevorzugt 10 bis 25 % des Durchmessers des Extraktionsrohres.

Ein weiterer Vorteil des erfindungsgemäßen Verfahrens ist, daß der in den unteren Teil des Extraktionsrohres geführte Strom der Extraktionsflüssigkeit wiederverwendet werden kann, ohne destillativ aufgearbeitet zu werden, sich also ein wirtschaftlicher Vorteil ergibt. Ursache dafür ist, daß die Extraktion im oberen Teil des Extraktionsrohres bereits so weitgehend ist, daß das Polyamid für unkritische Anwendungen verwendet werden könnte. Im unteren Teil des Extraktionsrohres erfolgt im wesentlichen die Restextraktion der Oligomeren, wodurch im Extraktionswasser nur geringe Konzentrationen an ε-Caprolactam und Oligomeren enthalten sind. Dieser Teilstrom der Extraktionsflüssigkeit kann für andere Betriebszwecke Verwendung finden oder aber vollständig oder zum Teil wieder zur Extraktion benutzt werden.

Durch die effektive Restextraktion im unteren Teil des Extraktionsrohres kann der nach oben strömende Teil der Extraktionsflüssigkeit so gering gehalten werden, daß eine hohe Caprolactamkonzentration in der oben ablaufenden Lösung erreicht wird. Damit werden die Eindampfkosten zur Rückgewinnung des Caprolactams niedrig gehalten. Bevorzugt werden Lactamkonzentrationen von 2 bis 25 %, besonders bevorzugt von 3 bis 15 %, eingestellt. Die im Gleichstrom mit dem Polyamid strömende Extraktionsflüssigkeit beträgt bevorzugt das 0,5 bis 10-fache, besonders bevorzugt das 1 bis 5-fache, der pro Zeiteinheit durchgesetzten Polyamidmenge.

Mit dem erfindungsgemäßen Verfahren gelingt es, den Dimerengehalt im Polyamid 6 auf Restgehalte von kleiner 0,05 % abzusenken. Damit steht für die Folienverarbeitung sowie für Spinnzwecke ein hochwertiges Material zur Verfügung.

Gegenstand der Erfindung ist auch ein entsprechendes Extraktionsrohr.

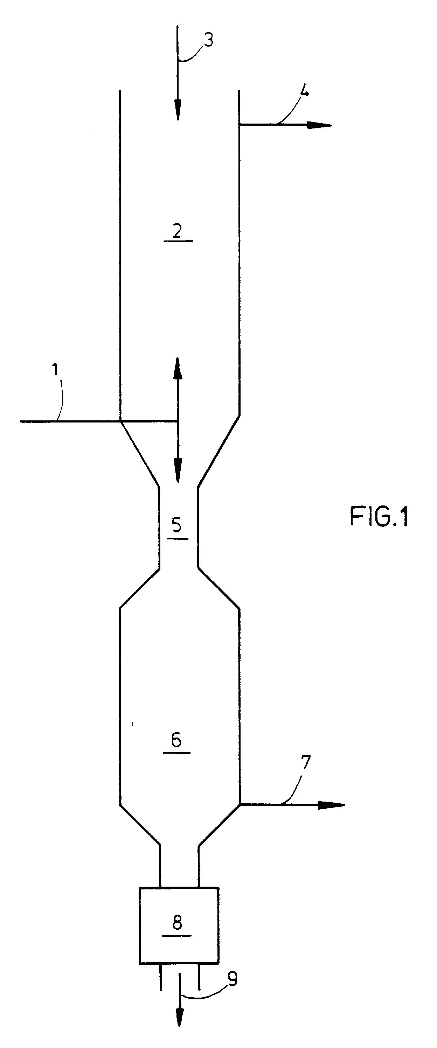

In Bild 1 ist die erfindungsgemäße Anordnung dargestellt:
Die Extraktionsflüssigkeit (1) strömt von unten in den oberen Teil (2) des zweigeteilten Extraktionsrohres. Von oben wird Polyamid (3) (beispielsweise Poly-ε-caprolactam) in Granulatform aufgegeben. Ein Teil der Extraktionsflüssigkeit wird als caprolactamhaltige Lösung (4) am Kopf des oberen Teils des Extraktionsrohres abgezogen und zur Wiedergewinnung des Caprolactams destillativ aufgearbeitet. Der verbleibende Teil der eingeleiteten Extraktionsflüssigkeit (1) wird durch das Übergangsrohr (5) in den unteren Teil (6) des zweigeteilten Extraktionsrohres geführt und an der Anschlußstelle (7) entnommen. Das extrahierte Material (9) wird mit einer Austragsvorrichtung (8) dem Extraktionsrohr entnommen und weiterverarbeitet.

### Beispiel 1 (Vergleichsbeispiel)

In einem Extraktionsrohr von 13 m Länge und 1 m Durchmesser werden 200 kg/h unextrahiertes Poly-ε-caprolactam kontinuierlich oben aufgegeben. Das Polyamid 6 weist einen Restlactamgehalt von 9,5 % und einen Dimerengehalt von 0,5 % auf. Gleichzeitig werden in das Extraktionsrohr von unten 250 l/h Wasser mit einer Temperatur von 85 bis 90°C eingeleitet. Das Extraktionsrohr verfügt über eine Mantelbeheizung, die so eingestellt ist, daß das oben ablaufende Extraktionswasser eine Temperatur von 95 bis 99°C erreicht. Die Lactamkonzentration im ablaufenden Wasser beträgt 7 %, der Restdimerengehalt im extrahierten Polyamid 6-Granulat 0,08 %.

### Beispiel 2

In einem senkrechten, zweigeteilten Extraktionsrohr werden 500 kg/h unextrahiertes Poly-ε-caprolactam kontinuierlich oben aufgegeben. Das Polyamid weist einen Restlactamgehalt von 9,5 % und einem Dimerengehalt von 0,5 % auf. Das Extraktionsrohr hat folgenden Aufbau:

| | | |
|---|---|---|
| oberer Teil: | Länge | 17 m |
| | Durchmesser | 1,3 m |
| Übergangsrohr: | Länge | 2 m |
| | Durchmesser | 0,2 m |
| unterer Teil: | Länge | 6 m |
| | Durchmesser | 1,3 m. |

Am unteren Ende des oberen Teiles des Extraktionsrohres werden 2 m³/h Wasser mit einer Temperatur von 85 bis 90°C eingespeist. 600 l/h werden am oberen Ende des oberen Teiles des Extraktionsrohres entnommen. Der Lactamgehalt im Extraktionswasser beträgt 7,2 %.

Der obere Teil des Extraktionsrohres wird so beheizt, daß die Temperatur des ablaufenden Extraktionswassers ca. 95 bis 99°C beträgt.

In den unteren Teil des ExtraktionsrohreS werden durch das Übergangsrohr 1,4 m³/h Wasser im Gleichstrom mit dem Polyamidgranulat geleitet. Die Temperatur im unteren Teil beträgt 125°C (unter dem hydrostatischen Druck der Füllung der Extraktionssäule).

Das extrahierte Polyamidgranulat weist einen Dimerengehalt von 0,02 % auf. Das den unteren Teil des Extraktionsrohres verlassende Extraktionswasser hat lediglich einen Lactamgehalt von 0,05 %.

## Patentansprüche

1. Verfahren zur kontinuierlichen Extraktion niedermolekularer Anteile aus Polyamiden mittels Extraktionsflüssigkeiten unter Verwendung eines Extraktionsrohres, dadurch gekennzeichnet, daß in einem zweigeteilten Extraktionsrohr, bei dem der obere Teil mit dem unteren Teil durch ein Übergangsrohr geringeren Durchmessers nämlich von 5 - 50 % des Durchmessers des Extraktionsrohres verbunden ist, im oberen Teil eine Gegenstromextraktion und im unteren Teil eine Gleichstromextraktion durchgeführt wird, indem die gesamte Extraktionsflüssigkeit am unteren Ende des oberen Teils des Extraktionsrohres eingeleitet wird und ein Teilstrom nach oben geführt und der andere Teilstrom durch das Übergangsrohr in den unteren Teil des Extraktionsrohres geführt wird.

2. Verfahren nach Anspruch 1, bei dem im oberen Teil mit Temperaturen extrahiert wird, die unterhalb des Siedepunktes der Extraktionsflüssigkeit bei Normaldruck liegen und im unteren Teil des Extraktionsrohres mit Temperaturen extrahiert wird, die wahlweise oberhalb oder unterhalb des Siedepunktes der Extraktionsflüssigkeit bei Normaldruck liegen.

3. Verfahren nach Ansprüchen 1 und 2, bei dem Wasser als Extraktionsmittel verwendet wird und im oberen Teil des Extraktionsrohres Temperaturen unterhalb 100°C, besonders bevorzugt 85 bis 99°C, und im unteren Teil des Extraktionsrohres Temperaturen bevorzugt oberhalb 100°C, besonders bevorzugt 110 bis 135°C, verwendet werden.

4. Verfahren nach Ansprüchen 1 bis 3, bei dem die im Gleichstrom mit dem Polyamid in den unteren Teil des Extraktionsrohres strömende Extraktionsflüssigkeit das 0,5 bis 10-fache, bevorzugt 1 bis 5-fache, der pro Zeiteinheit durchgesetzten Polyamidmenge beträgt.

5. Verfahren nach Ansprüchen 1 bis 4, bei dem nach der Extraktion von Poly-ε-caprolactam Restdimerengehalte von kleiner 0,05 %, bevorzugt kleiner 0,03 % erreicht werden.

6. Verfahren nach Ansprüchen 1 bis 4, bei dem das aus dem oberen Teil des Extraktionsrohres ablaufende Extraktionswasser im Falle der Extraktion von Poly-ε-Caprolactam praktisch die gesamte Menge des zu extrahierenden ε-Caprolactams enthält und das aus dem unteren Teil des Extraktionsrohres entnommene Extraktionswasser nur geringe Mengen ε-Caprolactam enthält.

7. Verfahren nach Ansprüchen 1 bis 4 und 6, bei dem das aus dem unteren Teil des Extraktionsrohres entnommene Extraktionswasser wiederverwendet wird, ohne destillativ aufgearbeitet zu werden.

8. Extraktionsrohr zum Extrahieren von Monomeren, Oligomeren sowie sonstigen niedermolekularen Anteilen aus Polyamiden mit Extraktionsflüssigkeiten, dadurch gekennzeichnet, daß in einem zweigeteilten Extraktionsrohr, bei dem der obere Teil mit dem unteren Teil durch ein Übergangsrohr mit einem Durchmesser von 5 - 50 % des Durchmessers des Extraktionsrohres verbunden ist, im oberen Teil eine Gegenstromextraktion und im unteren Teil eine Gleichstromextraktion durchgeführt wird, indem die gesamte Extraktionsflüssigkeit am unteren Ende des oberen Teiles des Extraktionsrohres eingeleitet wird und ein Teilstrom nach oben geführt und der andere Teilstrom durch das Übergangsrohr in den unteren Teil des Extraktionsrohres geführt wird.

## Claims

1. Process for the continuous extraction of low molecular weight constituents from polyamides by means of extraction fluids and utilising an extraction tube, characterised in that in a two-part extraction tube in which the upper part is connected to the lower part by a transition tube of a lesser diameter, namely of from 5 to 50% of the diameter of the extraction tube, there are carried out in the upper part a counter-current extraction, and in the lower part a co-current extraction, with the extraction fluid being introduced in its entirety at the lower end of the upper part of the extraction tube, and with one part current being guided upward and the other part current being guided through the transition tube into the lower part of the extraction tube.

2. Process according to Claim 1, in which there take place in the upper part extraction at temperatures which are below the boiling point of the extraction fluid at standard pressure, and in the lower part of the extraction tube extraction at temperatures which are optionally above or below the boiling point of the extraction fluid at standard pressure.

3. Process according to Claims 1 and 2, in which water is used as the extraction agent, and there are used in the upper part of the extraction tube temperatures below 100°C, particularly preferably from 85 to 99°C, and in the lower part of the extraction tube temperatures preferably above 100°C, particularly preferably from 110 to 135°C.

4. Process according to Claims 1 to 3, in which the quantity of extraction fluid which flows in co-current with the polyamide into the lower part of the extraction tube is from 0.5 to 10 times, preferably from 1 to 5 times, the polyamide throughput per unit of time.

5. Process according to Claims 1 to 4, in which there are achieved, after extraction of poly-ε-caprolactam, residual dimer contents of less than 0.05%, preferably less than 0.03%.

6. Process according to Claims 1 to 4, in which in the case of poly-ε-caprolactam extraction, the extraction water discharged from the upper part of the extraction tube contains virtually all the ε-caprolactam to be extracted, and the extraction water removed from the lower part of the extraction tube contains only small quantities of ε-caprolactam.

7. Process according to Claims 1 to 4 and Claim 6, in which the extraction water removed from the lower part of the extraction tube is reused without working up by distillation.

8. Extraction tube for the extraction of monomers, oligomers and other low molecular weight constituents from polyamides using extraction fluids, characterised in that in a two-part extraction tube in which the upper part is connected to the lower part by a transition tube having a diameter of from 5 to 50% of the diameter of the extraction tube, there are carried out in the upper part a counter-current extraction, and in the lower part a co-current extraction, with the extraction fluid being introduced in its entirety at the lower end of the upper part of the extraction tube, and with one part current being guided upward and the other part current being guided through the transition tube into the lower part of the extraction tube.

## Revendications

1. Procédé pour l'extraction continue des fractions à bas poids moléculaire contenues dans des polyamides au moyen de liquides d'extraction et avec utilisation d'un tube d'extraction, caractérisé en ce que, dans un tube d'extraction en deux parties dans lequel la partie supérieure est reliée à la partie inférieure par un tube de communication à plus petit diamètre, à savoir à un diamètre de 5 à 50% du diamètre du tube d'extraction, on procède dans la partie supérieure à une extraction à contre-courant et dans la partie inférieure à une extraction en courants parallèles en injectant tout le liquide d'extraction à l'extrémité inférieure de la partie supérieure du tube d'extraction et en conduisant un courant partiel vers le haut et l'autre courant partiel, au travers du tube de communication, dans la partie inférieure du tube d'extraction.

2. Procédé selon la revendication 1, dans lequel, dans la partie supérieure on extrait à des températures supérieures au point d'ébullition du liquide d'extraction à pression normale et dans la partie inférieure du tube d'extraction, on extrait à des températures à volonté supérieures ou inférieures au point d'ébullition du liquide d'extraction à pression normale.

3. Procédé selon les revendications 1 et 2, dans lequel on utilise de l'eau en tant que liquide d'extraction et on opère dans la partie supérieure du tube d'extraction à des températures inférieures à 100°C, de préférence à des températures de 85 à 99°C et, dans la partie inférieure du tube d'extraction, à des températures supérieures à 100°C, de préférence à des températures de 110 à 135°C.

4. Procédé selon les revendications 1 à 3, dans lequel le liquide d'extraction s'écoulant en courant parallèle avec le polyamide dans la partie inférieure du tube d'extraction représente de 0,5 à 10 fois, de préférence de 1 à 5 fois la quantité de polyamide traitée par unité de temps.

5. Procédé selon les revendications 1 à 4, dans lequel le poly-ε-caprolactame, après l'extraction, a des teneurs résiduelles en dimère inférieures à 0,05% et de préférence inférieures à 0,03%.

6. Procédé selon les revendications 1 à 4, dans lequel, dans le cas de l'extraction d'un poly-ε-caprolactame, l'eau d'extraction évacuée de la partie supérieure du tube d'extraction contient pratiquement tout l'ε-caprolactame à extraire et l'eau d'extraction évacuée de la partie inférieure du tube d'extraction ne contient que des petites quantités d'ε-caprolactame.

7. Procédé selon les revendications 1 à 4 et 6, dans lequel l'eau d'extraction évacuée de la partie inférieure du tube d'extraction est réutilisée sans être distillée.

8. Tube d'extraction pour l'extraction des monomères, des oligomères et autres fractions à bas poids moléculaire contenues dans des polyamides à l'aide de liquides d'extraction, caractérisé en ce que, dans un tube d'extraction en deux parties dans lequel la partie supérieure est reliée à la partie inférieure par un tube de communication dont le diamètre représente de 5 à 50% du diamètre du tube d'extraction, on procède dans la partie supérieure à une extraction à contre-courant et dans la partie inférieure à une extraction en courants parallèles en injectant tout le liquide d'extraction à l'extrémité inférieure de la partie supérieure du tube d'extraction et en conduisant un courant partiel vers le haut et l'autre courant partiel, au travers du tube de communication, dans la partie inférieure du tube d'extraction.
